(19) Europäisches Patentamt
European Patent Office
Office européen des brevets

(11) Publication number: **0 444 791 A1**

# (12) EUROPEAN PATENT APPLICATION

(21) Application number: **91301069.0**

(51) Int. Cl.$^5$: **C09D 7/00, C08F 220/04**

(22) Date of filing: **11.02.91**

The application is published incomplete as filed (Article 93 (2) EPC). The point in the description or the claim(s) at which the omission obviously occurs has been left blank.

(30) Priority: **14.02.90 US 479916**

(43) Date of publication of application: **04.09.91 Bulletin 91/36**

(84) Designated Contracting States: **AT BE CH DE DK ES FR GB GR IT LI LU NL SE**

(71) Applicant: **ROHM AND HAAS COMPANY**
**Independence Mall West**
**Philadelphia Pennsylvania 19105 (US)**

(72) Inventor: **Eisenhart, Eric Karl**
**60 John Dyer Way**
**Doylestown, Pennsylvania 18901 (US)**
Inventor: **Johnson, Eric Alvin**
**646 Wissahickon Avenue**
**Lansdale, Pennsylvania 19446 (US)**

(74) Representative: **Angell, David Whilton et al**
**ROHM AND HAAS (UK) LTD. European Operations Patent Department Lennig House**
**2 Mason's Avenue**
**Croydon CR9 3NB (GB)**

## (54) Polymeric thickeners for aqueous-based coatings.

(57) A polymeric thickener containing one or more polymer stages wherein :

at least one of said polymer stages is an ionically-soluble polymer, said ionically-soluble polymer being polymerized from a monomer mixture comprising ;

a) from about 0.1 to about 55% by weight of at least one first hydrophobic monomer ,

b) from about 10 to about 60% by weight ($C_3$-$C_{30}$) ethylenically-unsaturated, ionizable monomer, and

c) from about 0.1 to about 90% by weight nonionic ($C_2$-$C_{30}$) ethylenically-unsaturated monomer,

the improvement being characterized in that from about 10 to 100 weight % of said nonionic ($C_2$-$C_{30}$) ethylenically unsaturated monomer (c) is at least one second hydrophobic monomer selected from the groupconsisting of styrene, butyl acrylate, ethylhexyl acrylate, lauryl acrylate, stearyl acrylate, methyl methacrylate, and butyl methacrylate is disclosed. The thickeners are useful in aqueous-based coatings for improving early blister resistance, viscosity stability and/or heat age stability.

EP 0 444 791 A1

Jouve, 18, rue Saint-Denis, 75001 PARIS

# POLYMERIC THICKENERS FOR AQUEOUS-BASED COATINGS

This invention is concerned with a single or multiple stage thickener for aqueous-based coatings. More particularly, the invention concerns a hydrophobically-modified, ionically-soluble emulsion thickener which possesses unexpected improvements in the early blister resistance of aqueous-based coatings when applied to chalky substrates.

Many pH-responsive thickeners are known in the art and are used to thicken water-based compositions. These thickeners are generally based upon the incorporation of a hydrophobic surfactant monomer or chain transfer agent into a hydrophilic, polymeric backbone. The traditional backbone composition for these thickeners primarily included monomeric acid, such as acrylic or methacrylic acid, and an alkyl acrylates or methacrylates. Ethyl acrylate had been selected as the comonomer of choice. The present invention relates to unexpected performance property advantages resulting from the selection of comonomer other than ethyl acrylate. The hydrophobic surfactant component is primarily derived from a polyethoxylated alkyl group. It is believed that these molecules thicken water solutions or aqueous-based coating compositions , such as for example latex paints, through two mechanisms; hydrodynamic volume expansion from hydration of the hydrophilic backbone polymer chain, and hydrophobic associations between the hydrophobic species in the thickener molecules themselves and / or with other hydrophobic surfaces. It should be appreciated that these mechanisms are merely theoretical postulations, and should not be construed as limiting the present invention.

Several patents disclose pH-responsive or ionically-responsive, thickeners and the various linkages connecting the hydrophobic surfactant component to the polymer backbone.

U.S. Patent No. 4,384,096 discloses liquid emulsion polymers useful as pH-responsive thickeners containing an acrylate or methacrylate linkage.

U.S. Patent No. 4,569,965 discloses crotonate-containing polymeric thickeners.

U.S. Patent No. 4,464,524 discloses polymer thickeners containing maleate linkages.

U.S. Patent No. 4,663,385 discloses copolymers of alkyl poly(oxyalkylene) itaconic di-esters.

U.S. Patent No. 4,616,074 discloses acrylic-methylene succinic ester emulsion copolymers for thickening aqueous systems.

U.S. Patent No. 4,338,239 discloses thickener copolymers having allyl glycidyl ether linkages.

U.S. Patent No. 4,514,552 discloses alkali soluble latex thickeners containing urethane linkages.

U.S. Patent No. 4,600,761 discloses thickener copolymers containing isocyanato ethyl methacrylate linkages.

European patent publication No. 0216479 discloses polymeric thickeners containing allyl ether linkages.

The polymeric thickeners of the prior art have several disadvantages which have adversely affected their performance in paint applications. The disadvantages of the prior art thickeners are loss of viscosity upon heat-aging and colorant addition, decreased scrub resistance, and blistering over chalky substrates.

The invention disclosed in U.S. copending application Serial Number 352,226 overcomes nearly all these disadvantages of the prior art thickeners by providing multi-stage polymer particles wherein an ionically-soluble thickener copolymer (preferably base-soluble) has been physically or chemically attached (either directly or indirectly) to another (preferably base-insoluble) polymer stage. When the polymer particles of that invention are incorporated into water-containing compositions and neutralized with a base or acid, a portion of the ionically-soluble polymer stage remains attached to the remainder of the polymer particle.

In further evaluations of the ionically-soluble thickener component of the multistage polymer particles of the above-identified invention, we unexpectedly found that selected compositional modifications to the backbone of the ionically-soluble thickener polymer thereof provided significant improvements in certain properties, particularly when the thickener is used alone as the sole stage . These improvements include : improving the early blister resistance of aqueous-based coatings over chalky substrates; improvements in resistance to viscosity loss on the addition of predispersed colorants, and improved viscosity stability on heat aging.

In accordance with the present invention, there is provided an improved polymeric thickener containing one or more polymer stages, wherein at least one of said polymer stages is an ionically-soluble polymer, and where the ionically-soluble polymer being polymerized from a monomer mixture comprising:

a) from about 0.1 to about 55% by weight of at least one first hydrophobic monomer ,

b) from about 10 to about 60% by weight ($C_3$-$C_{30}$) ethylenically-unsaturated, ionizable monomer, and

c) from about 0.1 to about 90% by weight nonionic ($C_2$-$C_{30}$) ethylenically-unsaturated monomer, and where the improvement is characterized in that from about 10 to 100 weight % of said nonionic ($C_2$-$C_{30}$) ethylenically unsaturated monomer (c) is at least one second hydrophobic monomer selected from the group consisting of styrene, butyl acrylate, ethylhexyl acrylate, lauryl acrylate, stearyl acrylate, methyl methacrylate, and butyl methacrylate and mixtures thereof.

In the case where the polymer is a multistage polymer particle, the ionically-soluble polymer is physically or chemically attached to the polymer particle such that, upon neutralizing said ionically-soluble polymer with base or acid, at least a portion of said ionically-soluble polymer remains attached to the remainder of said polymer particle; and where said ionically-soluble polymer comprises from about 1% to about 99% by weight of said multistage polymer particle.

Further, the invention is directed to means for improving the early blister resistance and the viscosity stability upon heat aging and colorant addition of aqueous-based coatings.

This invention relates to improved ionically-soluble polymers which are useful as thickeners. The ionically-soluble polymers are useful in a variety of applications such as inks, adhesives, coatings, paints, pigment dispersants, textile thickeners, cosmetic formulations, oil well drilling fluids, liquid detergents and water treatment. The polymers of the present invention exhibit surprising improvements in viscosity stability upon addition of predispersed colorants , early blister resistance and viscosity stability upon heat aging.

The improved ionically-soluble polymers of this invention may contain one or more polymer stages wherein at least one of said polymer stages is an ionically-soluble polymer,and where the preferred ionically-soluble polymer is formed by polymerizing a monomer mixture of ;

a) about 0.1 to about 55% by weight of at least one first hydrophobic monomer having the formula;

$$[R_1\text{-}(A)_a\text{-}(CH_2\underset{\underset{R_2}{|}}{C}HO)_b\text{-}(CH_2CH_2O)_c\text{-}(CH_2\underset{\underset{R_3}{|}}{C}HO)_d\text{-}CH_2\underset{\underset{R_4}{|}}{C}H\,]_e\text{-}X$$

$$\text{where A is } \text{-O-},\ \text{-S-},\ \text{-}\underset{\underset{R_5}{|}}{N}\text{-},\ \text{-}\underset{\underset{O}{||}}{C}\text{-}\underset{\underset{R_5}{|}}{N}\text{-},\ \text{-}\underset{\underset{O}{||}}{C}\text{-O- or -O-}\underset{\underset{O}{||}}{C}\text{-O-};$$

$R_1$ is ($C_1$-$C_{30}$) alkyl, a (mono-,di-,or tri-) ($C_1$-$C_{30}$) alkyl-substituted phenyl ring, or a sorbitan fatty ester;
$R_5$ is H, ($C_1$-$C_{30}$) alkyl, a (mono-,di-,or tri-) ($C_1$-$C_{30}$) alkyl-substituted phenyl ring, or a sorbitan fatty ester;
$R_2$, $R_3$ and $R_4$ independently are -H or ($C_1$-$C_{10}$) alkyl, aryl or alkylaryl;
a is 0 or 1;
b is 0 to 50;
c is 0 to 150;
d is 0 to 50;
e is equal to or greater than 1,and
X is a group containing at least one ethylenic double bond;

b) from about 10 to about 60% by weight of at least one ($C_3$-$C_{30}$) ethylenically-unsaturated, ionizable monomer, and

c) from about 0.1 to about 90% by weight of at least one nonionic ($C_2$-$C_{30}$) ethylenically-unsaturated monomer, the improvement being characterized in that from about 10 to 100 weight % of said nonionic (C2-C30) ethylenically unsaturated monomer is at least one second hydrophobic monomer selected from the group consisting of styrene, butyl acrylate, ethylhexyl acrylate, lauryl acrylate, stearyl acrylate, methyl methacrylate, butyl methacrylate, and mixtures thereof, and

d) optionally from 0 to about 10% by weight of one or more multi-functional compounds.

The improved properties of the ionically-soluble polymer results from the selection of one or more of the above-identified second hydrophobic monomers in component (c) . In our prior patent application the preferred ionically-soluble polymer was primarily formed from ethyl acrylate. We unexpectedly have found that partial or complete substitution of ethyl acrylate with one or more of the above-identified second hydrophobic monomers provides a thickener with improved properties.

"Ionically-soluble" as used herein means that the polymer is substantially soluble in water when ionized by pH adjustment or chemical reaction (such as quaternization). Ionically-soluble preferably means that the polymer is either acid-soluble or base-soluble as defined herein. The term "acid-soluble" as used herein means that the polymer is substantially soluble in an aqueous medium which has been adjusted with acid to a pH of about 9.0 or less. The term "base-soluble" as used herein means that the polymer is substantially soluble in an aqueous medium which has been adjusted with base to a pH of about 5.0 or greater. The term "ionically-insoluble" as used herein means that the polymer is not ionically-soluble as defined above.

Preferably the monomer mixture for preparing the ionically-soluble polymer comprises from about 2 to about 20% of said first hydrophobic monomer (a). Preparation of such first hydrophobic monomers which can be used in this invention is described in many literature references, such as U.S. Patent No. 4,075,411. The first hydrophobic monomer can be represented by the following structural formula:

$$[R_1\text{-}(A)_a\text{-}(CH_2\underset{\displaystyle R_2}{\underset{|}{C}}HO)_b\text{-}(CH_2CH_2O)_c\text{-}(CH_2\underset{\displaystyle R3}{\underset{|}{C}}HO)_d\text{-}CH_2\underset{\displaystyle R_4}{\underset{|}{C}}H\ ]_e\text{-}X$$

where A is $-O-$, $-S-$, $-\underset{\displaystyle R_5}{\underset{|}{N}}-$, $-\underset{\displaystyle O}{\underset{||}{C}}-\underset{\displaystyle R_5}{\underset{|}{N}}-$, $-\underset{\displaystyle O}{\underset{||}{C}}-O-$ or $-O-\underset{\displaystyle O}{\underset{||}{C}}-O-$;

$R_1$ is ($C_1$-$C_{30}$) alkyl, a (mono-,di-,or tri-) ($C_1$-$C_{30}$) alkyl-substituted phenyl ring, or a sorbitan fatty ester;
$R_5$ is H, ($C_1$-$C_{30}$) alkyl, a (mono-,di-,or tri-) ($C_1$-$C_{30}$) alkyl-substituted phenyl ring, or a sorbitan fatty ester;
$R_2$, $R_3$ and $R_4$ independently are -H or ($C_1$-$C_{10}$) alkyl, aryl or alkylaryl;
a is 0 or 1;
b is 0 to 50;
c is 0 to 150;
d is 0 to 50;
e is equal to or greater than 1,and
X is a group containing at least one ethylenic double bond , but preferably is selected from the group consisting of acrylates, methacrylates, crotonates, maleates (mono-and di-esters), fumarates (mono- and di-esters), itaconates (mono-and di-esters), ethylenically-unsaturated urethanes, allyl ethers, methallyl ethers and vinyl ethers.

Ionizable monomer (b)

The ionically-soluble polymer can be either an acid-soluble polymer or a base-soluble polymer. The acid-soluble polymer stage comprises from about 10 to about 60% by weight ($C_3$-$C_{30}$) ethylenically unsaturated, ionizable monomers such as N, N-dimethylamino ethyl acrylate; N, N-dimethylamino ethyl methacrylate; N, N-diethylamino ethyl acrylate; N, N-diethylamino ethyl methacrylate; N-t-butylamino ethyl acrylate; N-t-butylamino ethyl methacrylate; N, N-dimethylamino propyl acrylamide; N, N-dimethylamino propyl methacrylamide; N, N-diethylamino propyl acrylamide; N, N-diethylamino propyl methacrylamide; p-aminostyrene; N, N-cyclohexylallylamine; 3-N, N-dimethylamino neopentyl acrylate; 3-N, N-dimethylamino neopentyl methacrylate; allylamine; diallylamine; dimethylallylamine; N-ethyl dimethallylamine; N-ethylmethallylamine; 2-vinylpyridine; 4-vinylpyridine; vinyl imidazole; and crotyl amines.

Preferably the ionically-soluble polymer is a base-soluble polymer wherein said ($C_3$-$C_{30}$) ethylenically-unsaturated, ionizable monomer (b) is a carboxylic acid monomer. The carboxylic acid monomer used in the polymerization of the base-soluble polymer preferably has the chemical formula:

$$R_6CH=\underset{\displaystyle R_7}{\underset{|}{C}}-COOH$$

where $R_6$ is -H, $-CH_3$ or COOY; $R_7$ is -H, ($C_1$-$C_4$) alkyl or $-CH_2COOY$; and Y is -H or ($C_1$-$C_{10}$) alkyl. Suitable carboxylic acid monomers include, for example, acrylic acid, methacrylic acid, itaconic acid, fumaric acid, maleic acid and crotonic acid. The most preferred carboxylic acid monomer is methacrylic acid.

Nonionic monomer ( second hydrophobic monomer) (c)

The nonionic ethylenically unsaturated monomer (c) useful in this invention is one or more second hydrophobic monomers selected from the group consisting of styrene, butyl acrylate, ethylhexyl acrylate, lauryl acrylate, stearyl acrylate, methyl methacrylate, and butyl methacrylate, used alone or in combination with each other. These monomers may used with other such monomers having the chemical formula;

$CH_2=C-Z_2$
|
$Z_1$

where $Z_1$ is -H, $-CH_3$ or Cl; $Z_2$ is -CN, -Cl, $-COOR_8$, $-C_6H_4R_9$,-

O O
|| ||
$COCH_2CH_2OCCH_2CH_3$, -CHO, $-CH=CH_2$, or $-OCR_{10}$;
||
O

where $R_8$ is $C_1$-$C_{10}$ alkyl or $C_2$-$C_8$ hydroxyalkyl, and
$R_9$ is -H, -Cl, -Br or $C_1$-$C_{10}$ alkyl; and
$R_{10}$ is $C_1$-$C_{10}$ alkyl.

The ionically soluble polymer of the invention is formed from about 5% to about 50%, preferably from about 10% to about 40%, and more preferably rom about 10% to about 30%, on the weight of the polymer, of one or more of the selected hydrophobic monomers (c): styrene, butyl acrylate, ethylhexyl acrylate, lauryl acrylate, stearyl acrylate, methyl methacrylate, and butyl methacrylate, used alone or in combination with each other. Preferably from about 10 to about 50 weight percent of said nonionic ($C_2$-$C_{30}$)ethylenically-unsaturated monomer (C) is butyl acrylate.

We have found that butyl acrylate, styrene, ethylhexyl acrylate and lauryl acrylate are the preferred second hydrophobic monomers(c) since thickeners prepared therefrom demonstrate improvements in viscosity stability upon heat aging and upon colorant addition. The improvement in early blister reduction with thickeners employing butyl acrylate and styrene, was clearly unexpected. This early blister resistance improvement was most significant when the hydrophobic comonomer was employed at a minimum concentration of about 30 percent, while improved viscosity stability was achieved when the hydrophobic comonomer was employed at minimum concentrations of about 10 percent.

Stearyl acrylate provided an improvement in viscosity stability upon colorant addition but no significant change in heat age performance, while butyl methacrylate and methyl methacrylate provided improvements in heat age performance but not in colorant addition.

Multifunctional monomer (d)

Multi-functional compounds as used herein means; a) compounds having two or more sites of unsaturation, b) reactive chain transfer agents having two or more abstractable atoms, c) hybrid compounds having one or more sites of unsaturation and one or more abstractable atoms; d)amine-functional monomers that associate ionically with a base-soluble stage; or e) compounds having one or more sites of unsaturation and one or more nucleophilic or electrophilic reaction sites.

The optional multi-functional monomers which are useful in polymerizing said ionically-soluble polymer are selected from the group consisting of : allyl-, methallyl-, vinyl-, and crotyl-esters of acrylic, methacrylic, maleic (mono- and di-esters), fumaric (mono- and di-esters), and itaconic (mono-and di-esters) acids; allyl-, methallyl-, and crotyl-vinyl ether and thioether; N- and N, N-di-allyl, methallyl-, crotyl- and vinyl-amides of acrylic and methacrylic acids; N-allyl-, methallyl-, and crotyl-maleimide; vinyl esters of 3-butenoic and 4-pentenoic acids; diallyl benzene; diallyl phthalate; triallyl cyanurate; O-allyl-, methallyl-, crotyl-, O-alkyl-, aryl-, P-vinyl-, P-allyl, P-crotyl, and P-methallyl-phosphonates; triallyl-, trimethallyl-, and tricrotyl-phosphates; O-vinyl-, O, O-diallyl-, dimethallyl-, and dicrotyl-phosphates; cycloalkenyl esters of acrylic, methacrylic, maleic (mono- and di-esters), fumaric (mono- and di-esters), and itaconic (mono- and di-esters) acids; vinyl ethers and vinyl thioethers of cycloalkenols and cycloalkene thiols; vinyl esters of cycloalkene carboxylic acids; 1, 3-butadiene, isoprene and other conjugated dienes; para-methylstyrene; chloromethylstyrene; allyl-, methallyl-, vinyl-, and crotyl-mercaptan; bromotrichloromethane; bromoform; carbon tetrachloride; carbon tetrabromide; N, N'-methylene- bis-acrylamide; ethylene glycol diacrylate; diethylene glycol diacrylate; triethylene glycol diacrylate; tetraethylene glycol diacrylate; polyethylene glycol diacrylate; polypropylene glycol diacrylate; butanediol diacrylate; hexanediol diacrylate; pentaerythritol triacrylate; trimethylolpropane triacrylate; tripropylene glycol diacrylate; neopentyl glycol diacrylate; ethylene

glycol dimethacrylate; diethylene glycol dimethacrylate; triethylene glycol dimethacrylate; polyethylene glycol dimethacrylate; polypropylene glycol dimethacrylate; butanediol dimethacrylate; hexanediol dimethacrylate; trimethylolethane trimethacrylate; trimethylolpropane trimethacrylate; divinyl benzene; glycidyl methacrylate; isocyanatoethyl methacrylate; alpha, alpha-dimethyl-m-isopropenyl benzyl isocyanate; chloroethyl acrylate; bromoethyl acrylate; iodoethyl acrylate; chloroethyl methacrylate; bromoethyl methacrylate and iodoethyl methacrylate.

The addition of the optional difunctional unsaturated monomer (d), such as for example crotyl methacrylate, allyl methacrylate, and diallyl phthalate had no significant improvement upon heat age viscosity stability or early blister resistance, however, improvements in viscosity stability upon colorant addition was achieved by the incorporation of 0.5 percent diallyl phthalate.

Chain transfer agents

The monomer mixture used to polymerize the ionically-soluble polymer can contain from about 0 to about 5% (based on the weight of said monomer mixture) of chain transfer agents selected from the group consisting of alkyl-mercaptans, such as dodecyl mercaptan, t-dodecyl mercaptan, octyl mercaptan, octyl decyl mercaptan, tetradecyl mercaptan and hexadecyl mercaptan; hydroxyethyl mercaptan; mercaptopropionic acid; methyl mercaptopropionate; ethyl mercaptopropionate; butyl mercaptopropionate; methyl thioglycolate; thioglycolic acid; ethyl thioglycolate and butyl thioglycolate.

Mutistage polymer

In the case where the polymer is a multistage polymer the ionically-soluble polymer is physically or chemically attached to a polymer particle such that, upon neutralizing said ionically-soluble polymer with base or acid, at least a portion of said ionically-soluble polymer remains attached to the remainder of said polymer particle; and,where said ionically-soluble polymer comprises from about 1% to about 99% by weight of said multistage polymer particle. In such embodiment the ionically-soluble polymer stage preferably comprises from about 50% to about 95%, more preferably about 70% to about 90%, most preferably about 80%, by weight of said polymer particle.

As described above, the ionically-soluble polymer is base-soluble. In the case of multiple stage polymer particles, the polymer particles of this invention comprise at least one base-soluble polymer stage and at least one base-insoluble polymer stage, wherein the weight ratio of said base-soluble polymer to said base-insoluble polymer is about 99:1 to about 1:99; more preferably about 95:5 to about 50:50. In such embodiment each of the polymer stages of the polymer particles is sequentially polymerized and, as used herein, the term "stage" refers to the polymer formed during each sequence of polymerization. Each stage is also defined as being different from the immediately proceeding and/or immediately subsequent stage by a difference of at least 0.1% by weight in monomer composition. The polymer particles may be prepared by a variety of processes which are well known in the art, such as suspension, emulsion, dispersion, bulk or solution polymerization. Preferably the multi-stage polymer particles of this invention are prepared by emulsion polymerization. Reference can be made to U.S. Patent No. 4,427,836 for examples of specific process conditions.

The multistage polymer particle preferably comprises at least one polymer stage which is base-insoluble and at least one polymer stage which is base-soluble. " Base-insoluble" as used herein means that the polymer is substantially insoluble in aqueous medium which has been adjusted with base to a pH of about 5.0 or greater. The base-insoluble stage has a particle size of 0.1 to about 5000 nanometers.

The composition of the multistage polymer stages, other than the ionically-soluble stage, is not critical and can be of any polymeric composition. Preferably, the polymer particles have at least one base-insoluble polymer stage which is polymerized from a monomer mixture comprising about 1% to about 100% by weight monoethylenically-unsaturated monomer and about 0% to about 99% by weight multi-functional compounds (more preferably from about 70 to 99.9% by weight monoethylenically-unsaturated monomers and 0.1% to 30% by weight multi-functional compounds). More preferably, said mono-ethylenically-unsaturated monomers are selected from the group consisting of methyl acrylate, ethyl acrylate, butyl acrylate, 2-ethylhexyl acrylate, decyl acrylate, hydroxyethyl acrylate, hydroxypropyl acrylate, hydroxybutyl acrylate, methyl methacrylate, ethyl methacrylate, butyl methacrylate, hydroxyethyl methacrylate, hydroxypropyl methacrylate, hydroxybutyl methacrylate, acrylonitrile, methacrylonitrile, acrylic acid, methacrylic acid, itaconic acid, maleic acid, fumaric acid, crotonic acid, acrylic anhydride, methacrylic anhydride, maleic anhydride, itaconic anhydride, fumaric anhydride, styrene, substituted styrene, vinyl acetate, vinyl butyrate, vinyl caprolate, acrylamide, methacrylamide, butadiene, isoprene, vinyl chloride, vinylidene chloride, ethylene, propylene and other $C_1$-$C_{18}$ alkyl or hydroxyalkyl acrylates, methacrylates, fumarates, maleates or crotonates. The base-insoluble polymer stage

can contain from about 0 to about 5% (based on weight of monomer) of chain transfer agents selected from the group consisting of alkyl-mercaptans such as dodecyl mercaptan, t-dodecyl mercaptan, octyl mercaptan, tetradecyl mercaptan, hexadecyl mercaptan and octadecyl mercaptan; hydroxyethyl mercaptan; mercaptopropionic acid; ethyl mercaptopropionate; methyl mercaptopropionate; butyl mercaptopropionate; thioglycolic acid; methyl thioglycolate; ethyl thioglycolate and butyl thioglycolate.

Multi-functional compounds as used herein means a)compounds having two or more sites of unsaturation; b)reactive chain transfer agents having two or more abstractable atoms; c)hybrid compounds having one or more sites of unsaturation and one or more abstractable atoms; d)amine-functional monomers that associate ionically with a base-soluble stage or ; e) compounds having one or more sites of unsaturation and one or more nucleophilic or electrophilic reaction sites. Preferably the multi-functional compounds used to polymerize said base-insoluble polymer stage are selected from the group consisting of allyl-, methallyl-, vinyl-, and crotyl-esters of acrylic, methacrylic, maleic (mono-and di-esters), fumaric (mono-and di-esters), and itaconic (mono- and di-esters) acids; allyl-, methallyl-, and crotyl-vinyl ether and thioether; N- and N, N-diallyl-methallyl-, crotyl-and vinyl-amides of acrylic and methacrylic acids; N-allyl-, methallyl-, and crotyl-maleimide; vinyl esters of 3-butenoic and 4-pentenoic acids; diallyl benzene, diallyl phthalate; triallyl cyanurate; O-allyl-, methallyl-, crotyl-, O-alkyl-, aryl-, P-vinyl-, P-allyl, P-crotyl-, and P-methallyl-phosphonates; triallyl-, trimethallyl-, and tricrotyl-phosphates; O-vinyl-, O, O-diallyl-, dimethallyl-, and dicrotyl-phosphates; cycloalkenyl esters of acrylic, methacrylic, maleic (mono-and di-esters), fumaric (mono-and di-esters), and itaconic (mono- and di-esters) acids [such as dicyclopentenyloxy- ethyl (meth) acrylate and dicyclopentenyl (meth) acrylate]; vinyl ethers and vinyl thioethers of cycloalkenols and cycloalkene thiols; vinyl esters of cycloalkene carboxylic acids; 1, 3-butadiene, isoprene and other conjugated dienes; para-methylstyrene; chloromethylstyrene; allyl-, methallyl-, vinyl-, and crotyl-mercaptan; bromotrichloromethane; bromoform; carbon tetrachloride; carbon tetrabromide; N, N'-methylene- bis-acrylamide; ethylene glycol diacrylate; diethylene glycol diacrylate; triethylene glycol diacrylate; tetraethylene glycol diacrylate; polyethylene glycol diacrylate; polypropylene glycol diacrylate; butanediol diacrylate; hexanediol diacrylate; pentaerythritol triacrylate; trimethylolpropane triacrylate; tripropylene glycol diacrylate; neopentyl glycol diacrylate; ethylene glycol dimethacrylate; diethylene glycol dimethacrylate; triethylene glycol dimethacrylate; polyethylene glycol dimethacrylate; polypropylene glycol dimethacrylate; butanediol dimethacrylate; hexanediol dimethacrylate; trimethylolethane trimethacrylate; trimethylolpropane trimethacrylate; divinyl benzene; N, N-dimethylamino ethyl acrylate; N, N-dimethylamino ethyl methacrylate; N, N-diethylamino ethyl acrylate; N, N-diethylamino ethyl methacrylate; N-t-butylamino ethyl acrylate; N- t-butylamino ethyl methacrylate; N, N-dimethylamino propyl acrylamide; N, N-dimethylamino propyl methacrylamide; N, N-diethylamino propyl acrylamide; N, N-diethylamino propyl methacrylamide; p-aminostyrene, N, N-cyclohexylallylamine; 3-N, N-dimethylamino neopentyl acrylate; 3-N, N-dimethylamino neopentyl methacrylate; diallylamine; dimethallylamine; N-ethyl dimethallylamine; N-ethylmethallylamine; N-methyldiallylamine; 2-vinylpyridine; 4-vinyl- pyridine; glycidyl methacrylate; isocyanatoethyl methacrylate; alpha, alpha-dimethyl-m-isopropenyl benzyl isocyanate; chloroethyl acrylate; bromoethyl acrylate; iodoethyl acrylate; chloroethyl methacrylate; bromoethyl methacrylate and iodoethyl methacrylate.

In preparing the multi-stage polymer particles of the present invention, the ionically-insoluble polymer stage can be polymerized first and subsequently the ionically-soluble polymer stage is polymerized in the presence of the ionically-insoluble polymer stage. Alternatively, the ionically-soluble polymer stage can be polymerized first and subsequently the ionically-insoluble polymer stage is polymerized in the presence of the ionically-soluble polymer stage (i.e. inverse polymerization); due to the hydrophobicity of the ionically-insoluble polymer, it becomes one or more domains within the ionically-soluble polymer. A further technique for preparing the multi-stage polymer particles involves polymerization of the ionically-insoluble polymer stage, addition of multi-functional compounds which are allowed to soak into said ionically-insoluble polymer, polymerization of said multi-functional compounds, and subsequent polymerization of said ionically-soluble polymer stage.

The ionically-soluble polymer is physically or chemically attached to the polymer particle such that, upon neutralizing said ionically-soluble polymer (with either a base in the case of a base-soluble polymer or an acid in the case of an acid-soluble polymer) a significant portion (i.e. about 0.5% by weight or greater) of the ionically-soluble polymer remains attached to the remainder of the polymer particle. Physically or chemically attached as used herein means attachment by Van der Waals or London forces, ionic bonding, covalent bonding, hydrogen bonding, chain entanglement or any other means. Preferably the ionically-soluble polymer is chemically grafted to the polymer particle using one or more of the multi-functional compounds described below. Chemical grafting results in permanent attachment of a portion of the ionically-soluble polymer to the polymer particle and results in improved stability toward alcohols/solvents, colorants and other additives.

The following multi-functional compounds may be useful to graft said ionically-soluble polymer stage to said ionically-insoluble polymer stage wherein said ionically-insoluble polymer stage is polymerized initially and said ionically-soluble polymer stage is subsequently polymerized: allyl-, methallyl-, vinyl, and crotyl-esters of acrylic,

methacrylic, maleic (mono- and di-esters), fumaric (mono- and di-esters), and itaconic (mono- and di-esters) acids; allyl-, methallyl, and crotyl-vinyl ether and thioether; N- and N, N-di-allyl-, methallyl-, crotyl, and vinylamides of acrylic and methacrylic acids; N-allyl-, methallyl, and crotyl-maleimide; vinyl esters of 3-butenoic and 4-pentenoic acids; diallyl benzene, diallyl phthalate; triallyl cyanurate; O-allyl-,methallyl-, crotyl-, O- alkyl-, aryl-, P-vinyl-, P-allyl, P-crotyl-, and P-methallyl-phosphonates; triallyl-, trimethallyl-, and tricrotyl-phosphates; O-vinyl-, O, O-diallyl-, dimethallyl-, and dicrotyl-phosphates; cycloalkenyl esters of acrylic, methacrylic, maleic (mono- and di-esters), fumaric (mono- and di-esters), and itaconic (mono- and di-esters) acids; vinyl ethers and vinyl thioethers of cycloalkenols and cycloalkene thiols; vinyl esters of cycloalkene carboxylic acids; 1, 3-butadiene, isoprene and other conjugated dienes; paramethylstyrene; chloromethylstyrene; allyl-, methallyl-, vinyl-, and crotyl-mercaptan; bromotrichloromethane; bromoform; carbon tetrachloride; carbon tetrabromide; glycidyl methacrylate; isocyanatoethel methacrylate; alpha, alpha-dimethyl-m-isopropenyl benzyl isocyanate; chloroethyl acrylate; bromoethyl acrylate; iodoethyl acrylate; chloroethyl methacrylate; bromoethyl methacrylate and iodoethyl methacrylate. The multi-functional compounds listed above are polymerized as part of and during the polymerization of said ionically-insoluble polymer stage.

The following multi-functional compounds are useful for grafting wherein said ionically-insoluble polymer stage is polymerized first, followed by the addition of multi-functional compounds which are allowed to soak into said ionically-insoluble polymer, and subsequent sequential polymerization of said multi-functional compounds and said ionically-soluble polymer stage, respectively: N, N-methylene-bis-acrylamide; ethylene glycol diacrylate; diethylene glycol diacrylate; triethylene glycol diacrylate; tetraethylene glycol diacrylate; polyethylene glycol diacrylate; polypropylene glycol diacrylate; butanediol diacrylate; hexanediol diacrylate; pentaerythritol triacrylate; trimethylolpropane triacrylate; tripropylene glycol triacrylate; neopentyl glycol diacrylate; ethylene glycol dimethacrylate; diethylene glycol dimethacrylate; triethylene glycol dimethacrylate; polyethylene glycol dimethacrylate; polypropylene glycol dimethacrylate; butanediol dimethacrylate; hexanediol dimethacrylate; trimethylolethane trimethacrylate; trimethylolpropane trimethacrylate; divinyl benzene; allyl-, methallyl-, vinyl, and crotyl-esters of acrylic, methacrylic, maleic (mono- and di-esters), fumaric (mono- and di-esters), and itaconic (mono- and di-esters) acids; allyl-, methallyl, and crotyl-vinyl ether and thioether; N- and N, N-di-allyl-, methallyl-, crotyl-, and vinyl-amides of acrylic and methacrylic acids; N-allyl-, methallyl, and crotyl-maleimide; vinyl esters of 3-butenoic and 4-pentenoic acids; diallyl benzene, diallyl phthalate; triallyl cyanurate; O-allyl-, methallyl-, crotyl-, O-alkyl-, aryl-, P-vinyl-, P-allyl, P-crotyl-, and P-methallyl-phosphonates; triallyl-, trimethallyl-, and tricrotyl-phosphates; O-vinyl-, O, O-diallyl-, dimethallyl-, and dicrotyl-phosphates; cycloalkenyl esters of acrylic, methacrylic, maleic (mono- and di-esters), fumaric (mono- and di-esters), and itaconic (mono- and di-esters) acids; vinyl ethers and vinyl thioethers of cycloalkenols and cycloalkene thiols; vinyl esters of cycloalkene carboxylic acids; 1, 3-butadiene, isoprene and other conjugated dienes; glycidyl methacrylate; isocyanatoethyl methacrylate; alpha, alpha-dimethyl-m-isopropenyl benzyl isocyanate; chloroethyl acrylate; bromoethyl acrylate; iodoethyl acrylate; chloroethyl methacrylate; bromoethyl methacrylate; iodoethyl methacrylate.

The following multi-functional compounds are useful for grafting wherein said ionically-soluble polymer stage is initially polymerized along with said multi-functional compounds and subsequently said ionically-insoluble polymer stage is polymerized (inverse polymerization): allyl-, methallyl-, vinyl, and crotyl-esters of acrylic, methacrylic, maleic (mono-and di-esters), fumaric (mono- and di-esters), and itaconic (mono- and di-esters) acids; allyl-, methallyl, and crotyl-vinyl ether and thioether; N- and N, N-di-allyl-, methallyl-, crotyl, and vinylamides of acrylic and methacrylic acids; N-allyl-, methallyl, and crotyl-maleimide; vinyl esters of 3-butenoic and 4-pentenoic acids; diallyl benzene, diallyl phthalate; triallyl cyanurate; O-allyl-, methallyl-, crotyl-, O-alkyl-, aryl-, P-vinyl-, P-allyl-, P-crotyl-, and P-methallyl-phosphonates; triallyl-, trimethallyl-, and tricrotyl-phosphates; O-vinyl-, O, O-diallyl-, dimethallyl-, and dicrotyl-phosphates; cycloalkenyl esters of acrylic, methacrylic, maleic (mono -and di-esters), fumaric (mon- and di-esters), and itaconic (mono- and di-esters) acids; vinyl ethers and vinyl thioethers of cycloalkenols and cycloalkene thiols; vinyl esters of cycloalkene carboxylic acids; 1, 3-butadiene, isoprene and other conjugated dienes; para-methylstyrene; chloromethylstyrene; allyl-, methallyl-, vinyl-, and crotyl-mercaptan; bromotrichloromethane; bromoform; carbon tetrachloride and carbon tetrabromide.

The following multi-functional compounds are useful for grafting wherein said ionically-soluble stage is initially polymerized and subsequently the ionically-insoluble stage is polymerized along with said multi-functional compounds (inverse polymerization): N, N-dimethylamino ethyl acrylate; N, N-dimethylamino ethyl methacrylate; N, N-diethylamino ethyl acrylate; N, N-diethylamino ethyl methacrylate; N-t-butylamino ethyl acrylate; N-t-butylamino ethyl methacrylate; N, N-dimethylamino propyl acrylamide; N, N-dimethylamino propyl methacrylamide; N, N-diethylamino propyl acrylamide; N, N-diethylamino propyl methacrylamide; p-aminostyrene; N, N-cyclohexylallylamine; 3-N, N-dimethylamino neopentyl acrylate; 3-N, N-dimethylamino neopentyl methacrylate; diallylamine; dimethallylamine; N-ethyl dimethallylamine; N-ethylmethallylamine; N-methyldiallylamine; 2-vinylpyridine; 4-vinylpyridine.

The multi-functional compounds listed below are useful for grafting wherein said ionically-soluble stage is initially polymerized and subsequently said ionically-insoluble stage is polymerized (inverse polymerization). These multi-functional compounds can be polymerized in either said ionically-soluble or ionically-insoluble stages: glycidyl methacrylate; isocyanatoethyl methacrylate; alpha, alpha-dimethyl-m-isopropenyl benzyl isocyanate; chloroethyl acrylate; bromoethyl acrylate; iodoethyl acrylate; chloroethyl methacrylate; bromoethyl methacrylate; iodoethyl methacrylate.

The most preferred multi-functional compounds for grafting in the inverse polymerization techniques are the crotyl-esters of acrylic, methacrylic, maleic (mono- and di-esters), fumaric (mono- and di-esters), and itaconic (mono- and di-esters) acids (such as crotyl methacrylate); crotyl-vinyl ether and thioether; N-di-crotyl-amides of acrylic and methacrylic acids; N-crotyl-maleimide; O-crotyl-, P-crotyl-phosphonates; tricrotyl-phosphates; dicrotyl-phosphates; cycloalkenyl esters of acrylic, methacrylic, maleic (mono- and di-esters), fumaric (mono- and di-esters), and itaconic (mono- and di-esters) acids (such as dicyclopentenyloxyethyl-methacrylate, dicyclopentenyl acrylate, dicyclopentenyl methacrylate); vinyl ethers and vinyl thioethers of cycloalkenols and cycloalkene thiols; vinyl esters of cycloalkene carboxylic acids; and crotyl-mercaptan. The multi-functional compounds listed above are polymerized as part of and during the polymerization of said ionically-soluble polymer stage.

The thickener polymers and multistage particles of this invention are useful in a wide variety of applications. The polymers are useful either in dried form or as an emulsion of the polymer particles in an aqueous medium. The polymer particles are preferably used as an aqueous emulsion composition or added to water-containing compositions wherein in either case the ionically-soluble polymer is neutralized and substantially dissolved with either a base or an acid; except that a portion of said ionically-soluble polymer remains attached or associated with the insoluble polymer stage(s). Based on equivalents of carboxylic acid in the base-soluble polymer, preferably about 0.8 to about 1.5 equivalents of base are introduced to said compositions to neutralize the base-soluble polymer. The neutralized base-soluble polymer is dissolved in the aqueous medium, but a significant portion remains attached to the remainder of the polymer particle.

Any base may be used to neutralize said base-soluble polymer , but is preferably selected from the group consisting of ammonium hydroxide, potassium hydroxide, sodium hydroxide, lithium hydroxide, triethylamine, triethanolamine, monoethanolamine, 2-amino-2-methyl-1-propanol and dimethylaminoethanol.

The polymer particles are useful in a method of thickening water-containing compositions (preferably containing about 20% by weight water or greater) by incorporating the polymer particles therein and neutralizing. The base-soluble polymer is neutralized with base by adjusting the pH of the compositions to about 5.0 or greater. The acid-soluble polymer is neutralized with acid by adjusting the pH of the composition to about 9.0 or less. The amount of the polymer particles used as a thickener depends upon the particular application, but is generally used in an amount of from about 0.1% to about 20% by weight of the total composition. The compositions to be thickened using the polymer particles of this invention can contain many additional ingredients such as pigments, fillers, extenders, surfactants, stabilizers, biocides and the like.

In another aspect, the present invention provides a method of improving the early blister resistance of aqueous-based coatings comprising adding to said aqueous-based coating formulation an improved polymeric thickener containing one or more polymer stages wherein:

at least one of said polymer stages is an ionically-soluble polymer, said ionically-soluble polymer being polymerized from a monomer mixture comprising:

a) from about 0.1 to about 55% by weight of at least one first hydrophobic monomer ,

b) from about 10 to about 60% by weight ($C_3$-$C_{30}$) ethylenically-unsaturated, ionizable monomer, and

c) from about 30 to about 90% by weight nonionic ($C_2$-$C_{30}$) ethylenically-unsaturated monomer,

the improvement being characterized in that from about 10 to 100 weight % of said nonionic ($C_2$-$C_{30}$) ethylenically unsaturated monomer (c) comprises at least one second hydrophobic monomer selected from the group consisting of styrene, butyl acrylate, ethylhexyl acrylate, lauryl acrylate,stearyl acrylate, methyl methacrylate, butyl methacrylate, and mixtures thereof, and where the concentration of said thickener in said aqueous-based coating is from about 0.1 weight percent to about 20 weight percent thickener on the weight of said aqueous-based coating.

In another aspect, the present invention provides a method of improving the viscosity stability of an aqueous-based coating comprising adding to said aqueous-based coating an effective amount of the improved polymeric thickener of claim 1.

In another aspect, the present invention provides a method for improving the viscosity stability upon heat aging and colorant addition of an aqueous-based coating comprising adding to said coating an effective amount of the improved thickener of claim 1 wherein said second hydrophobic monomer (c) is selected from the group consisting butyl acrylate, styrene, ethylhexyl acrylate, lauryl acrylate, and mixtures thereof.

In another aspect, the present invention provides a method for improving the viscosity stability of an

aqueous-based coating upon colorant addition comprising adding to said aqueous-based coating an effective amount of the improved thickener of claim 1 wherein said second hydrophobic monomer (c) is stearyl acrylate.

In another aspect, the present invention provides a method for improving the heat age stability of an aqueous coating comprising adding to said coating an effective amount of the improved thickener of claim 1 wherein said second hydrophobic monomer (c) is selected from the group consisting of butyl methacrylate and methyl methacrylate.

In yet another aspect, the present invention provides the use of the polymeric thickener in the above methods.

The following examples are presented to demonstrate this invention. The examples are intended in an illustrative, but not limitative, sense. All parts and percentages are by weight unless otherwise indicated.

The following abbreviations are used in the Examples:

| | |
|---|---|
| BA | = butyl acrylate |
| MMA | = methyl methacrylate |
| ALMA | = allyl methacrylate |
| MAA | = methacrylic acid |
| EA | = ethyl acrylate |
| MA-20 | = methacrylate ester of a 20 mole ethoxylate of cetyl-stearyl alcohol |
| D.I. water | = deionized water |
| CrMA | = crotyl methacrylate |
| CPS | = centipoise |
| DPH | = diallyl phthalate |
| BMA | = butyl methacrylate |
| ST | = styrene |
| Cr-20 | = crotyl ester of a 20 mole ethoxylate of cetyl-stearyl alcohol |
| Al-20 | = allyl ester of a 20 mole ethoxylate of cetyl-stearyl alcohol |
| TMI-20 | = alpha, alpha-dimethyl-m-isopropenyl benzyl isocyanate adduct with a 20 mole ethoxylate of cetyl-stearyl alcohol |
| DDM | = dodecyl mercaptan |
| EHA | = 2-ethylhexyl acrylate |
| LA | = lauryl acrylate |
| SA | = stearyl acrylate |
| IT-20 | = itaconate half ester of a 20 mole ethoxylate of cetyl-stearyl alcohol |

Example 1:Comparative example:Monomer (c )is EA

A stirred reactor containing 1,600 g of deionized (D.I.) water, and 28 g of 28 wt% sodium lauryl sulfate solution (in water) was heated to 80 deg. C. under nitrogen. Next 70 g of the monomer emulsion (M.E.) shown below, was added to the reactor followed by 0.95 g of ammonium persulfate dissolved in 35 g of D.I. water, and a 25 g D.I. water rinse. After 10 minutes, the remainder of the M.E. and the cofeed initiator (shown below) was added to the reactor over 210 minute period while maintaining the reactor temperature at 80 deg. C. A 100 g D.I. water rinse was used to flush the feed lines at the end of the reaction and the water added to the kettle. After a 30 minute hold (at 80 deg. C.) the solution was cooled to 60 deg. C. and residual unreacted monomers were polymerized by the addition of a redox initiator system in water at 60 degrees C. for an additional 15 minutes. The final product had a solids content of 32.3%, a Brookfield viscosity of 10 centipoises (cps), and a pH of 2.7. When 6.2 g of this material was mixed with 0.8 g of 50 wt% NaOH and 193.0 g of D.I. water the resulting mixture had a viscosity of 112 cps (Brookfield viscometer, 30 rpm). When 12.4 g of this material was mixed with 1.7 g of 50 wt% NaOH and 186.0 g of D.I. water the resulting mixture had a viscosity of 10,460 cps (30 rpm).

| | M.E. |
|---|---|
| D.I. Water | 585.0 g |
| Sodium Lauryl Sulfate (28 wt%) | 38.8 g |
| MAA | 535.7 g |
| EA | 625.0 g |
| MA-20 (70 wt% Solution in MAA) | 89.3 g |
| DDM | 2.5 g |

| | Cofeed Initiator |
|---|---|
| D.I. Water | 118.0 g |
| Ammonium Persulfate | 1.3 g |

Examples 2-8: Butyl Acrylate : Monomer (c)

Each of the following samples were made by the method described in Example 1 above with the compositions shown in Table 1 below.

TABLE 1- BA LADDER

| | Monomer | | | | |
|---|---|---|---|---|---|
| | (c) | | (a) | (d) | |
| Example # | EA | BA | MAA | MA-20 | DDM |
| 2 | 45 | 5 | 45 | 5 | 0.20 |
| 3 | 40 | 10 | 45 | 5 | 0.20 |
| 4 | 30 | 20 | 45 | 5 | 0.20 |
| 5 | 25 | 25 | 45 | 5 | 0.20 |
| 6 | 20 | 30 | 45 | 5 | 0.20 |
| 7 | 10 | 40 | 45 | 5 | 0.20 |
| 8 | --- | 50 | 45 | 5 | 0.20 |

Examples 9-14 Alternate Monomers (c)

All of the the following thickeners ( examples 9-14) were made by the method described in Example 1 above with the compositions shown in Table 2.

TABLE 2

| Examples # | | | | Monomer(c) EA | Alternate Monomer | | MAA | MA-20 | DDM |
|---|---|---|---|---|---|---|---|---|---|
| 9 | | | | 25 | 25 ST | | 45 | | |
| | 25 | | 0.20 | | | | | | |
| 10 | | | | 25 | 25 | | | | |
| EHA | 45 | | 25 | | 0.20 | | | | |
| 11 | | | | 25 | 25 | | | | |
| BMA | 45 | | 25 | | 0.20 | | | | |
| 12 | | | | 25 | 25 | | | | |
| MMA | 45 | | 25 | | 0.20 | | | | |
| 13 | | | | 25 | 25 | | | | |
| LA | | 45 | | 25 | | 0.20 | | | |
| 14 | | | | 25 | 25 | | | | |
| SA | | 45 | | 25 | | 0.20 | | | |

Examples 15-20 Monomer (d)

The following examples were prepared according to the method described in Example 1 utilizing various optional multifunctional monomers (d) and having the compositions shown below in Table 3.

Table 3

| Examples | Monomer (c) | | Monomer(b) | Monomer(a) | Monomer | |
|---|---|---|---|---|---|---|
| (d) DDM | | | | | | |
| | EA | BA | MAA | MA-20 | | |
| 15 | 24.90 | 25 | 45 | 5 | 0.1 CrMA | 0.2 |
| 16 | 24.75 | 25 | 45 | 5 | 0.25 CrMA | 0.2 |
| 17 | 24.95 | 25 | 45 | 5 | 0.05 ALMA | 0.2 |
| 18 | 24.75 | 25 | 45 | 5 | 0.25 ALMA | 0.2 |
| 19 | 24.90 | 25 | 45 | 5 | 0.10 DPH | 0.2 |
| 20 | 24.50 | 25 | 45 | 5 | 0.50 DPH | 0.2 |

E xamples 21-24 First Hydrophobic Monomer (Monomer (a))

The following examples were prepared according to the method described in Example 1 utilizing various first hydrophobic monomers (monomer (a)) and having the compositions shown in Table 4.

Table 4

| Examples (c) | Hydrophobic Monomer (a) Monomer(b) | Monomer EA | BA | MAA | DDM |
|---|---|---|---|---|---|
| 21 | 4.9 AI-20 | 25.1 | 25 | 45 | 0.2 |
| 22 | 5.6 TMI-20 | 24.4 | 25 | 45 | 0.2 |
| 23 | 5.0 Cr-20 | 25.0 | 25 | 45 | 0.2 |
| 24 | 5.1 IT-20 | 24.9 | 25 | 45 | 0.2 |

## Examples 25 - 47 Performance Properties

### Test Methods

Each sample was characterized for its thickening efficiency, viscosity stability when subjected to heat aging, viscosity stability upon addition of colorant, and early blister resistance by the following test methods..

Each paint was thickened to target viscosity of 85 Krebs Units (KU) and a pH of 9.5 adjusted with ammonium hydroxide and the amount of thickener was recorded. The efficiency of the thickener was recorded as the solid lbs. of thickener per 100 gallons of paint that would have been required to reach the target KU. The equilibrated KU and ICI viscosity of each sample was measured after3 to 5 days. Prior to measuring the equilibrated viscosity, the samples were sheared for 5 minutes on a Red Devil paint mixer. a film of each paint was then cast with a 3 mil bird applicator over a Leneta 5C opacity chart and dried for 3 days at 77° F and 50% relative humidity. The to 60° gloss of the dried film was then evaluated.

The heat-age viscosity stability was determined by subjecting approx. 250 g of the paint, in a 1/2 pt. paint can, to storage at 60°C for 10 days. After the samples were allowed to cool to room temperature, the KU viscosity of paint was evaluated after hand shearing and shearing for 5 min. on the Red Devil shaker. The viscosity stability is rated by the difference in KU viscosity between the heat-aged sheared and equilibrated sheared values.

Viscosity stability upon colorant addition was evaluated by measuring the KU viscosity drop that occurred after the addition of an equivalent of 8 oz. of pthalo blue colorant per gallon of paint.

To evaluate the early water sensitivity of the paints, two coats applied to a chalky acrylic substrate (F-6 formulation weathered to an ASTM rating of 5 based on the pictorial standards of method D659-86) by brush with a 6 hour dry period between coats. After the second coat, he substrate was allowed to further dry overnight. All operations were performed at 77° F and 50% relative humidity. After drying, the substrate was then subjected to a mist/fog of deionized water and the formation of blister defects were rated as a function of time. Blisters were rated both by the size of individual blisters and by their surface coverage using the ASTM pictorial standard ASTM D-714. Since the test is dependent on both the variation of the naturally weathered substrate and the subjectivity of the rating, only relative comparisons can be made and only within an experimental series.

Acrylic semi-gloss paints having 29.8% pigment volume content (PVC) and 34.8% volume solids were prepared utilizing the thickener samples of the invention. The composition of the paint formulation is shown in Table 5 and the performance of these paint samples are reported in Table6.

Table 5

Acrylic Paint Test Formulations (1069.99 pounds/100 gallons)

| Material | Pounds |
|---|---|
| Propylene glycol | 70.00 |
| Tamol SG-1 (35%) | 12.00 |
| Foamaster VL | 1.00 |
| Water | 45.00 |
| Ti-Pure R-900 | 210.00 |
| ASP-170 | 88.00 |
| Water | 50.00 |
| Acrylic Binder (Rohm and Haas Company Rhoplex™-AC64) | 378.00 |
| Texanol | 11.40 |
| Foamaster VL | 3.00 |
| Nuosept 95 | 2.00 |
| Aqueous Ammonia (28%) | 1.80 |
| Sample Thickener /water | 197.79 |

Table 6

PERFORMANCE PROPERTIES

| Example | Thickener Example | Efficiency (Dry lbs./100gal) | Color Sensitivity (change in KU) | Heat Age Stability (change in KU) Sh | HS | Early Blister Resistance hours 0.5 | 1.0 | 2.0 | 4.0 |
|---|---|---|---|---|---|---|---|---|---|
| 25 (comp) | 1 | 2.67 | -11 | -11 | +2 | 6MD | 4MD | 3MD | 3D |
| 26 | 2 | 2.48 | -6 | -5 | 0 | 6M | 6M | 4M | 4MD |
| 27 | 3 | 2.70 | -5 | -5 | 0 | 6M | 5M | 4M | 4MD |
| 28 | 4 | 3.12 | -7 | -7 | -1 | 6M | 5M | 4M | 4MD |
| 29 | 5 | 3.69 | -7 | -8 | +3 | 6M | 5MD | 4MD | 4MD |
| 30 | 6 | 4.85 | -8 | -8 | 0 | 5MD | 4D | 3D | 3D |
| 31 | 7 | 6.47 | -4 | -5 | +3 | 5D | 4D | 3D | 3D |
| 32 | 8 | 5.14 | -8 | -5 | -4 | 6M | 5M | 4M | 4MD |
| 33 | 9 | 7.23 | -4 | -1 | +5 | 5D | 3D | 2D | 2D |
| 34 | 10 | 4.59 | -12 | -2 | -1 | 5D | 4D | 2D | 2D |
| 35 | 11 | 3.45 | -17 | -6 | -2 | 6D | 4D | 2D | 2D |
| 36 | 12 | 4.46 | -5 | -4 | +8 | 5MD | 3D | 2D | 2D |
| 37 | 13 | 2.24 | -7 | -10 | +11 | 5MD | 4MD | 3MD | 3D |
| 38 | 14 | 3.02 | -6 | -9 | +2 | 6M | 5M | 4M | 3M |
| 39 | 15 | 2.96 | -6 | -8 | +4 | 6M | 5M | 5M | 4M |
| 40 | 16 | 2.59 | -4 | -8 | +9 | 6M | 6M | 5M | 4M |
| 41 | 17 | 2.99 | -5 | +15 | +28 | 5M | 4MD | 3MD | 3D |
| 42 | 18 | 2.73 | -5 | -7 | +7 | 6M | 5M | 4M | 3M |
| 43 | 20 | 2.51 | -2 | +7 | +25 | 6M | 5M | 4M | 3M |
| 44 | 21 | 3.56 | -8 | +9 | +3 | 5MD | 4D | 3D | 3D |
| 45 | 22 | 3.96 | -11 | -9 | +3 | 5MD | 4D | 3D | 3D |
| 46 | 23 | 4.95 | -6 | -8 | +5 | 5MD | 4D | 3D | 3D |
| 47 | 24 | 8.00 | -3 | -6 | +3 | 4D | 3D | 2D | 2D |

## Claims

1. An polymeric thickener containing one or more polymer stages wherein: at least one of said polymer stages is an ionically-soluble polymer, said ionically-soluble polymer being polymerized from a monomer mixture comprising:
   a) from 0.1 to 55%, preferably 2 to 20%, by weight of at least one first hydrophobic monomer ,
   b) from 10 to 60% by weight ($C_3$-$C_{30}$) ethylenically-unsaturated, ionizable monomer, and
   c) from 0.1 to 90%, preferably 10 to 90% by weight nonionic ($C_2$-$C_{30}$) ethylenically-unsaturated monomer, wherein from 50 to 100 weight % of said nonionic ($C_2$-$C_{30}$) ethylenically unsaturated monomer (c) comprises at least one second hydrophobic monomer selected from the group consisting of styrene, butyl acrylate, ethylhexyl acrylate, lauryl acrylate, stearyl acrylate, methyl methacrylate, butyl methacrylate, and mixtures thereof.

2. A polymeric thickener as claimed in claim 1, wherein said ionically-soluble polymer is polymerized from a monomer mixture further comprising (d) from 0 or up to 10 %by weight on total monomer weight of one or more multifunctional monomers.

3. A polymeric thickener of as claimed in claim 1 or claim 2, wherein said ionically-soluble polymer further comprises 0 or up to 5%, based on the weight of said monomer mixture, of one or more chain transfer agents selected from the group consisting of alkyl-mercaptans, hydroxyethyl mercaptan, mercaptopropionic acid, methyl mercaptopropionate, ethyl mercaptopropionate, butyl mercaptopropionate,methyl thioglycolate, thioglycolic acid, ethyl thioglycolate and butyl thioglycolate.

4. A polymeric thickener as claimed in any one of the preceding claims, wherein said thickener is a multistage polymer and wherein said ionically-soluble polymer comprises from 1 to 99 weight percent of said multistage polymer.

5. A polymeric thickener as claimed in any one of the preceding claims, wherein said first hydrophobic monomer (a) comprises at least one monomer having the formula

$$[R_1\text{-}(A)_a\text{-}(CH_2\underset{\underset{R_2}{|}}{CH}O)_b\text{-}(CH_2CH_2O)_c\text{-}(CH_2\underset{\underset{R_3}{|}}{CH}O)_d\text{-}CH_2\underset{\underset{R_4}{|}}{CH}\ ]_e\text{-}X$$

$$\text{where A is -O-, -S-, } \text{-}\underset{\underset{R_5}{|}}{N}\text{-},\ \text{-C-}\underset{\underset{R_5}{|}}{N}\text{-},\ \text{-}\underset{\underset{O}{||}}{C}\text{-}\underset{\underset{R_5}{|}}{O}\text{-},\ \text{-}\underset{\underset{O}{||}}{C}\text{-O or -O-}\underset{\underset{O}{||}}{C}\text{-O-;}$$

   $R_1$ is ($C_1$-$C_{30}$) alkyl, a (mono-,di-,or tri-) ($C_1$-$C_{30}$) alkyl-substituted phenyl ring, or a sorbitan fatty ester;
   $R_5$ is H, ($C_1$-$C_{30}$) alkyl, a (mono-,di-,or tri-) ($C_1$-$C_{30}$) alkyl-substitute phenyl ring, or a sorbitan fatty ester;
   $R_2$, $R_3$ and $R_4$ independentiy are -H or ($C_1$-$C_{10}$) alkyl, aryl or alkylaryl;
   a is 0 or 1;
   b is 0 to 50;
   c is 0 to 150;
   d is 0 to 50;
   e is equal to or greater than 1, and
   X is a group containing at least one ethylenic double bond.

6. A polymeric thickener as claimed in any one of claims 1-5 wherein said ($C_3$-$C_{30}$) ethylenically-unsaturated, ionizable monomer (b) is a carboxylic acid monomer.

7. A polymeric thickener as claimed in claim 6 wherein said carboxylic acid monomer (b) has the chemical formula:

$$\begin{array}{l} R_6CH{=}C\text{-}COOH \\ \qquad\quad\ | \\ \qquad\quad R_7 \end{array}$$

where $R_6$ is -H, $-CH_3$ or COOY; $R_7$ is -H, $(C_1\text{-}C_4)$ alkyl or $-CH_2COOY$; and Y is -H or $(C_1\text{-}C_{10})$ alkyl.

**8.** Use of a polymeric thickener, as claimed in any one of the preceding claims, in an aqueous based coating, for improving early blister resistance, viscosity stability and/or heat age stability of the coating.

European Patent Office

# EUROPEAN SEARCH REPORT

Application Number

EP 91 30 1069

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X,P | WO-A-9007529 (DESOTO, INC)<br>* claims 1, 2, 5-8 *<br>--- | 1, 2, 5-8 | C09D7/00<br>C08F220/04 |
| X | EP-A-248612 (CROWN DECORATIVE PRODUCT)<br>* claims 1-8 *<br>--- | 1, 2, 5-8 | |
| X,D | EP-A-109820 (ROHM AND HAAS)<br>* claims 1-8, 10 *<br>--- | 1, 2, 5-8 | |
| A | EP-A-115771 (THE DOW CHEMICAL COMPANY)<br>* claim 1 *<br>----- | 4 | |

TECHNICAL FIELDS SEARCHED (Int. Cl.5 )

C09D
C08F

The present search report has been drawn up for all claims

| Place of search | Date of completion of the search | Examiner |
|---|---|---|
| THE HAGUE | 17 JUNE 1991 | BUSCAGLIONE Y. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)